(19) Europäisches Patentamt
European Patent Office
Office européen des brevets

(11) EP 2 526 124 B1

(12) # EUROPÄISCHE PATENTSCHRIFT

(45) Veröffentlichungstag und Bekanntmachung des Hinweises auf die Patenterteilung:
**19.03.2014 Patentblatt 2014/12**

(21) Anmeldenummer: **11700538.9**

(22) Anmeldetag: **17.01.2011**

(51) Int Cl.:
***C08F 2/20*** (2006.01) ***C08F 2/22*** (2006.01)
***C08F 2/26*** (2006.01)

(86) Internationale Anmeldenummer:
**PCT/EP2011/050494**

(87) Internationale Veröffentlichungsnummer:
**WO 2011/089078 (28.07.2011 Gazette 2011/30)**

(54) **VERFAHREN ZUR HERSTELLUNG EINER WÄSSRIGEN POLYMERISATDISPERSION**

METHOD FOR PRODUCING AN AQUEOUS POLYMER DISPERSION

PROCÉDÉ DE PRÉPARATION D’UNE DISPERSION AQUEUSE DE POLYMÉRISAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.01.2010 EP 10151203**

(43) Veröffentlichungstag der Anmeldung:
**28.11.2012 Patentblatt 2012/48**

(73) Patentinhaber: **BASF SE**
**67056 Ludwigshafen (DE)**

(72) Erfinder:
- **SCHÖNFELDER, Daniel**
  **B-1000 Bruxelles (BE)**
- **AL-HELLANI, Rabie**
  **67063 Ludwigshafen (DE)**
- **SCHROEDER, Marc**
  **Canton**
  **MI 48188 (US)**
- **HABERECHT, Monika**
  **67063 Ludwigshafen (DE)**
- **CRISTADORO, Anna**
  **64646 Heppenheim (DE)**
- **BRUCHMANN, Bernd**
  **67251 Freinsheim (DE)**
- **VENKATESH, Rajan**
  **Mumbai 400019 (IN)**

(56) Entgegenhaltungen:
**WO-A1-03/099889**
**WO-A1-2004/072125**
**WO-A1-2008/071687**
**WO-A1-2008/071801**
**US-A1- 2007 202 071**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 526 124 B1

## Beschreibung

Gegenstand der vorliegenden Erfindung ist ein Verfahren zur Herstellung einer wässrigen Dispersion von Polymerisatteilchen mit einem zahlenmittleren Teilchendurchmesser ≤ 100 nm durch radikalisch initiierte Polymerisation wenigstens eines ethylenisch ungesättigten Monomeren M in Anwesenheit wenigstens eines Radikalinitiators und wenigstens eines hochverzweigten Polymeren in einem wässrigen Polymerisationsmedium, wobei zur Polymerisation ≤ 1 Gew.-% wenigstens eines Dispergierhilfsmittels und ≥ 5 und ≤ 60 Gew.-% des wenigstens einen hochverzweigten Polymeren, bezogen auf die Gesamtmenge des wenigstens einen ethylenisch ungesättigten Monomeren M (Gesamtmonomerenmenge), eingesetzt werden,wobei das wenigstens eine hochverzweigte Polymere durch einen Verzweigungsgrad DB von 10 bis 100% charakterisiert ist und wobei das wenigstens eine hochverzweigte Polymere ≥ 0,3 mmol Säuregruppen pro Gramm hochverzweigtem Polymer aufweist, welches dadurch gekennzeichnet ist, dass im wässrigen Polymerisationsmedium zuerst lediglich

| | |
|---|---|
| ≥ 10 Gew.-% | der Gesamtmenge des wenigstens einen hochverzweigten Polymeren und gegebenenfalls |
| ≤ 50 Gew.-% | der Gesamtmenge des wenigstens einen ethylenisch ungesättigten Monomeren M |

vorgelegt und daran anschließend unter Polymerisationsbedingungen die gegebenenfalls verbliebene Restmenge des wenigstens einen hochverzweigten Polymeren zugegeben und die Gesamtmenge bzw. die gegebenenfalls verbliebene Restmenge des wenigstens einen ethylenisch ungesättigten Monomeren M zugegeben und bis zu einem Monomerenumsatz ≥ 80 Gew.-% polymerisiert werden.

Ebenfalls Gegenstand dieser Erfindung sind die nach dem erfindungsgemäßen Verfahren zugänglichen wässrigen Polymerisatdispersionen, die daraus erhältlichen Polymerisatpulver sowie die Verwendung der wässrigen Polymerisatdispersionen oder der Polymerisatpulver.

Zur Herstellung von wässrigen Polymerisatdisperisonen unter Verwendung von hochverzweigten Polymeren ist von folgendem Stand der Technik auszugehen.

So offenbart die WO 2004/072125 die Herstellung von wässrigen Ethylen/Vinylester-Copolymerisat-Dispersionen unter Druck, wobei der wässrigen Phase neben einer großen Menge an Dispergierhilfsmittel geringe Mengen an dendritischen Polymeren zugesetzt sind. Bevorzugte dendritische Polymere weisen wenigstens 6 Hydroxylgruppen auf.

In der US-B 7,109,247 werden wässrige Dispersionen anorganischer oder organischer Feststoffteilchen offenbart, wobei zu deren Dispergierung in wässriger Phase verzweigte oder hyperverzweigte Polyethylenoxide eingesetzt werden.

Gemäß der US-A 2007/202071 werden ganz allgemein dendritische Polymere, aufgebaut aus hydrophoben und hydrophilen Strukturelementen als Dispergierhilfsmittel in wässrigen Systemen offenbart. Unter einer Vielzahl von Anwendungen findet sich auch der allgemeine Hinweis, dass aus hydrophoben und hydrophilen Strukturelementen aufgebaute dendritische Polymere auch als Dispergierhilfsmittel bei der wässrigen Emulsionspolymerisation eingesetzt werden können.

WO 2008/071801 offenbart eine wässrige Polymerdispersion, die ein Emulsionspolymerisat wenigstens eines $\alpha,\beta$-ethylenisch ungesättigten Monomers und wenigstens ein hochverzweigtes Polycarbonat enthält. Das hochverzweigte Polycarbonat hat einen Teilchendurchmesser < 150 nm.

Vor diesem Hintergrund des Standes der Technik bestand die Aufgabe der vorliegenden Erfindung in einem spezifischen Verfahren zur Herstellung wässriger Polymerisatdispersionen, deren Polymerisatteilchen einen zahlenmittleren Teilchendurchmesser ≤ 100 nm aufweisen.

Die Aufgabe wurde durch die Bereitstellung des eingangs definierten Verfahrens gelöst.

Zur Herstellung der wässrigen Dispersion von Polymerisatteilchen mit einem zahlenmittleren Teilchendurchmesser ≤ 100 nm (Polymerisatdispersion) wird klares Wasser, bevorzugt entionisiertes Wasser verwendet, dessen Gesamtmenge so bemessen wird, dass sie 30 bis 95 Gew.-% und vorteilhaft 50 bis 85 Gew.-%, jeweils bezogen auf die wässrige Polymerisatdispersion, beträgt. Erfindungsgemäß wird dabei wenigstens eine Teilmenge des Wassers in einem Polymerisationsgefäß als wässriges Polymerisationsmedium vorgelegt. Die gegebenenfalls verbliebene Restmenge an Wasser kann dem Polymerisationsmedium dann unter Polymerisationsbedingungen diskontinuierlich in einer oder mehreren Portionen oder kontinuierlich mit gleichbleibenden oder sich ändernden Mengenströmen zugeführt werden. Vorteilhaft werden die gegebenenfalls verbliebenen Restmengen an Wasser gemeinsam mit den ethylenisch ungesättigten Monomeren M und/oder den Radikalinitiatoren dem wässrigen Polymerisationsmedium unter Polymerisationsbedingungen zudosiert, wobei bevorzugt die verbliebenen Restmengen an Wasser gemeinsam mit den Radikalinitiatoren zudosiert werden.

Erfindungsgemäß können als ethylenisch ungesättigte Monomere M alle diejenigen ethylenisch ungesättigten Monomere eingesetzt werden, welche üblicherweise bei der dem Fachmann geläufigen radikalisch initiierten wässrigen Emulsionspolymerisation eingesetzt werden. Als Monomere M kommen alle diejenigen ethylenisch ungesättigten Monomere in Betracht, die bei 20 °C und 1 atm (absolut) eine Löslichkeit < 100 g, bevorzugt < 60 g und insbesondere

bevorzugt < 20 g pro 1000 g entionisiertem Wasser aufweisen, wie beispielsweise Olefine, wie Ethylen oder Propylen, vinylaromatische Monomere, wie Styrol, α-Methylstyrol, o-Chlorstyrol oder Vinyltoluol, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie C4-8-konjugierte Diene, wie 1,3-Butadien (Butadien) und Isopren. Die genannten Monomere bilden in der Regel die Hauptmonomeren, die, bezogen auf die Gesamtmenge an Monomeren M, einen Anteil von ≥ 30 Gew.-%, häufig ≥ 50 Gew.-% und oft ≥ 80 Gew.-% auf sich vereinen.

Als Monomere M kommen auch alle diejenigen ethylenisch ungesättigten Monomere in Betracht, die bei 20 °C und 1 atm (absolut) eine Löslichkeit ≥ 200 g, bevorzugt ≥ 300 g und insbesondere bevorzugt ≥ 500 g pro 1000 g entionisiertem Wasser aufweisen. Monomere M, welche eine solch hohe Wasserlöslichkeit aufweisen, tragen häufig wenigstens eine Säuregruppe, insbesondere eine Carbonsäure- oder Sulfonsäuregruppe, eine Hydroxyalkylgruppe, eine Amidgruppe, eine Ethylenharnstoffgruppe, eine Acetoacetoxygruppe, wie beispielsweise Acrylsäure, Methacrylsäure, 2-Acrylamido-2-methyl-propansulfonsäure (AMPS), Vinylsulfonsäure, Acrylamid, Methacrylamid, N-(2-Methacryloyloxyethyl)ethylenharnstoff (UMA), N-(2-Acryloyloxyethyl)ethylenharnstoff, 2-Acetoacetoxyethylacrylat, 2-Acetoacetoxyethylmethacrylat (AAEM), Diacetonacrylamid (DAAM), 2-Hydroxyethylacrylat, Hydroxypropylacrylat, 2-Hydroxyethylmethacrylat und Hydroxypropylmethacrylat. Insbesondere bevorzugt sind Acrylsäure, Methacrylsäure, Acrylamid und/oder AMPS. Selbstverständlich sollen erfindungsgemäß auch die Alkalimetal- oder Ammoniumsalze der vorgenannten Monomeren mit einer Säure-, insbesondere einer Carbon- oder Sulfonsäuregruppe umfasst sein. Die Menge dieser wasserlöslichen Monomere M beträgt in der Regel ≤ 10 Gew.-%, vorteilhaft ≥ 0,5 und ≤ 5 Gew.-% und insbesondere vorteilhaft ≥ 1 und ≤ 3 Gew.-%, jeweils bezogen auf die Gesamtmenge der Monomeren M.

Monomere M, die üblicherweise die innere Festigkeit der Verfilmungen einer Polymermatrix erhöhen, weisen normalerweise wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl-und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Cyclopentadienylacrylat, Triallylcyanurat oder Triallylisocyanurat. Die Menge dieser sogenannten vernetzenden Monomere M beträgt in der Regel ≥ 0,01 und ≤ 60 Gew.-%, vorteilhaft ≥ 0,5 und ≤ 50 Gew.-% und insbesondere vorteilhaft ≥ 1 und ≤ 30 Gew.-%, jeweils bezogen auf die Gesamtmenge der Monomeren M.

Selbstverständlich können erfindungsgemäß auch Gemische verschiedener Monomere M eingesetzt werden.

Erfindungsgemäß vorteilhaft lassen sich vorteilhaft solche Mischungen von Monomeren M einsetzen, welche

| | |
|---|---|
| 30 bis 99,9 Gew.-% | Ester der Acryl- und/oder Methacrylsäure mit 1 bis 12 C-Atome aufweisenden Alkanolen und/oder Styrol, oder |
| 30 bis 99,9 Gew.-% | Styrol und/oder Butadien, oder |
| 30 bis 99,9 Gew.-% | Vinylchlorid und/oder Vinylidenchlorid, oder |
| 30 bis 99,9 Gew.-% | Vinylacetat, Vinylpropionat, Vinylester der Versaticsäure, Vinylester langkettiger Fettsäuren und/oder Ethylen |

enthalten.

Insbesondere vorteilhaft lassen sich erfindungsgemäß solche Mischungen von Monomeren M einsetzen, welche

| | |
|---|---|
| - 0,1 bis 5 Gew.-% | wenigstens eine 3 bis 6 C-Atome aufweisende α,β-monoethylenisch ungesättigte Mono- und/oder Dicarbonsäure und/oder deren Amid und |
| 30 bis 99,9 Gew.-% | wenigstens eines Esters der Acryl- und/oder Methacrylsäure mit 1 bis 12 C-Atome aufweisenden |

Alkanolen und/oder Styrol,

oder

| | |
|---|---|
| - 0,1 bis 5 Gew.-% | wenigstens eine 3 bis 6 C-Atome aufweisende α,β-monoethylenisch ungesättigte Mono- und/oder Dicarbonsäure und/oder deren Amid und |
| 30 bis 99,9 Gew.-% | Styrol und/oder Butadien, oder |
| - 0,1 bis 5 Gew.-% | wenigstens eine 3 bis 6 C-Atome aufweisende α,β-monoethylenisch ungesättigte Mono- und/oder Dicarbonsäure und/oder deren Amid und |
| - 30 bis 99,9 Gew.-% | Vinylchlorid und/oder Vinylidenchlorid, oder |
| - 0,1 bis 5 Gew.-% | wenigstens eine 3 bis 6 C-Atome aufweisende α,β-monoethylenisch ungesättigte Mono- und/oder Dicarbonsäure und/oder deren Amid und |
| 30 bis 99,9 Gew.-% | Vinylacetat, Vinylpropionat, Vinylester der Versaticsäure, Vinylester langkettiger Fettsäuren und/oder Ethylen |

enthalten.

Erfindungsgemäß werden bevorzugt solche Mischungen von Monomeren M eingesetzt, deren durch Polymerisation erhältliches Polymerisat eine Glasübergangstemperasur ≥ -50 und ≤ 180 °C, insbesondere ≥ -10 und ≤ 120°C und vorteilhaft ≥ 0 und ≤ 100 °C aufweist. Dabei ist es dem Fachmann möglich, durch die gezielte Auswahl von Art und Menge der Monomeren M die Glasübergangstemperatur des erfindungsgemäß erhältlichen Polymerisats einzustellen. Mit der Glasübergangstemperatur (Tg), ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53 765).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/Tg = x1/Tg1 + x2/Tg2 + .... xn/Tgn,$$

wobei x1, x2, .... xn die Massenbrüche der Monomeren 1, 2, .... n und Tg1, Tg2, Tgn die Glasübergangstemperaturen der jeweils nur aus einem der Monomeren 1, 2, n aufgebauten Polymerisaten in Grad Kelvin bedeuten. Die Tg-Werte für die Homopolymerisate der meisten Monomeren sind bekannt und z.B. in Ullmann's Encyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York, 1966; 2nd Ed. J.Wiley, New York, 1975 und 3rd Ed. J. Wiley, New York, 1989.

Mit besonderem Vorteil sind die Hauptmonomeren M ausgewählt aus der Gruppe umfassend Methylacrylat, Ethylacrylat, n-Butylacrylat, tert.-Butylacrylat, 2-Ethylhexylacrylat, 2-Propylheptylacrylat, Methylmethacrylat, Ethylmethacrylat, n-Butylmethacrylat, tert.-Butylmethacrylat, 2-Ethylhexylmethacrylat, 2-Propylheptylmethacrylat, Styrol, Vinyltoluol, 2-Methylstyrol, 4-Methylstyrol, 2-n-Butylstyrol, 4-n-Butylstyrol, 4-n-Decylstyrol, Vinylacetat, Vinylpropionat, Acrylnitril, und Methacrylnitril.

Erfindungsgemäß können im Rahmen des vorliegenden Verfahrens ≤ 1 Gew.-% wenigstens eines Dispergierhilfsmittels, bezogen auf die Gesamtmonomerenmenge, mitverwendet, werden. Als Dispergierhilfsmittel kommen sowohl die zur Durchführung von radikalischen wässrigen Emulsionspolymerisationen üblicherweise eingesetzten Schutzkolloide als auch Emulgatoren in Betracht. Beide Substanzklassen sind dem Fachmann geläufig.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden.

Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Erfindungsgemäß werden als Dispergiermittel jedoch insbesondere Emulgatoren eingesetzt.

Gebräuchliche nichtionische Emulgatoren sind z.B. ethoxylierte Mono-, Di- und Tri-Alkylphenole (EO-Grad: 3 bis 50, Alkylrest: C4 bis C12) sowie ethoxylierte Fettalkohole (EO-Grad: 3 bis 80; Alkylrest: C8 bis C36). Beispiele hierfür sind die Lutensol® A-Marken (C12C14-Fettalkoholethoxylate, EO-Grad: 3 bis 8), Lutensol® AO-Marken (C13C15-Oxoalkoholethoxylate, EO-Grad: 3 bis 30), Lutensol® AT-Marken (C16C18-Fettalkoholethoxylate, EO-Grad: 11 bis 80), Lutensol® ON-Marken (C10-Oxoalkohol-ethoxylate, EO-Grad: 3 bis 11) und die Lutensol® TO-Marken (C13-Oxoalkoholethoxy-late, EO-Grad: 3 bis 20) der Fa. BASF AG.

Übliche anionische Emulgatoren sind z.B. Alkalimetall- und Ammoniumsalze von Alkylsulfaten (Alkylrest: C8 bis C12), von Schwefelsäurehalbestern ethoxylierter Alkanole (EO-Grad: 4 bis 30, Alkylrest: C12 bis C18) und ethoxylierter Alkylphenole (EO-Grad: 3 bis 50, Alkylrest: C4 bis C12), von Alkylsulfonsäuren (Alkylrest: C12 bis C18) und von Alkylarylsulfonsäuren (Alkylrest: C9 bis C18).

Als weitere anionische Emulgatoren haben sich ferner Verbindungen der allgemeinen Formel (I)

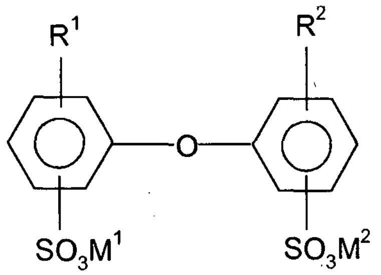

(I) ,

worin $R^1$ und $R^2$ H-Atome oder C4- bis C24-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Geeignete kationenaktive Emulgatoren sind in der Regel einen C6- bis C18-Alkyl-, -Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethyl-ammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammonium-sulfat, N-Octyl-N,N,N-trimethlyammoniumsulfat, N,N-Distearyl-N,N-dimethylammo-niumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol® AC der Fa. BASF SE, ca. 12 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegengruppen möglichst gering nucleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat.

Die Gesamtmenge der als Dispergierhilfsmittel eingesetzten Emulgatoren und/oder Schutzkolloide beträgt ≤

1 Gew.-%, vorteilhaft ≤ 0,5 Gew.-% und insbesondere vorteilhaft ≤ 0,1 Gew.-%, jeweils bezogen auf die Gesamtmonomerenmenge. Häufig werden keinerlei Dispergierhilfsmittel eingesetzt.

Werden jedoch Dispergierhilfsmittel eingesetzt, so ist es möglich, wenigstens eine Teilmenge des wenigstens einen Dispergierhilfsmittels vorzulegen und die gegebenenfalls verbliebene Restmenge dem wässrigen Polymerisationsmedium unter Polymerisationsbedingungen zuzuführen. Selbstverständlich ist es auch möglich, die Gesamtmenge des wenigstens einen Dispergierhilfsmittels unter Polymerisationsbedingungen zuzudosieren. Dabei kann die jeweilige Dosierung des Dispergierhilfsmittels unter Polymerisationsbedingungen diskontinuierlich in einer oder mehreren Portionen oder kontinuierlich mit sich ändernden oder gleichbleibenden Mengenströmen erfolgen.

Die Polymerisationsreaktion der ethylenisch ungesättigten Monomeren M im wässrigen Polymerisationsmedium wird durch wenigstens einen Radikalinitiator initiiert. Dabei können erfindungsgemäß alle diejenigen Radikalinitiatoren eingesetzt werden, welche dem Fachmann aus der radikalisch initiierten wässrigen Emulsionspolymerisation bekannt sind. Hierbei kann sich prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmonomerenmenge, ≥ 0,01 und ≤ 5 Gew.-%, bevorzugt ≥ 0,1 und ≤ 3 Gew.-% und insbesondere bevorzugt ≥ 0,2 und ≤ 1,5 Gew.-%.

Erfindungsgemäß kann die Gesamtmenge des Radikalinitiators im wässrigen Polymerisationsmedium vor Initiierung der Polymerisationsreaktion vorgelegt werden. Es ist aber auch möglich, gegebenenfalls lediglich eine Teilmenge des Radikalinitiators im wässrigen Polymerisationsmedium vor Initiierung der Polymerisationsreaktion vorzulegen und dann unter Polymerisationsbedingungen während der erfindungsgemäßen radikalischen Polymerisationsreaktion die Gesamtmenge bzw. die gegebenenfalls verbliebene Restmenge nach Maßgabe des Verbrauchs kontinuierlich oder diskontinuierlich zuzugeben.

Unter hochverzweigten Polymeren werden im Rahmen dieser Erfindung ganz allgemein Polymere verstanden, die sich durch eine stark verzweigte Struktur und eine hohe Funktionalität auszeichnen. Zur allgemeinen Definition hochverzweigter Polymerer wird auch auf P.J. Flory, J. Am. Chem. Soc. 1952, 74, Seiten 2718 bis 2723, und H. Frey et al., Chem. Eur. J. 2000, 6, Nr. 14, Seiten 2499 bis 2506, Bezug genommen (dort abweichend von der hier gewählten Definition als "hyperbranched polymers" bezeichnet).

Zu den hochverzweigten Polymeren im Sinne der Erfindung zählen speziell dendritische Polymere, bestehend aus den Gruppen der Dendrimere und der hyperverzweigten Polymere.

Dendrimere leiten sich strukturell von Sternpolymeren ab, wobei jedoch die einzelnen Ketten jeweils ihrerseits sternförmig verzweigt sind und einander identisch sind, so dass eine hoch symmetrische Struktur entsteht. Dendrimere entstehen ausgehend von kleinen Molekülen an die über eine sich ständig wiederholende definierte Reaktionsfolge Verzweigungseinheiten-tragende Monomere addiert werden. So wächst mit jedem Reaktionsschritt die Zahl der Monomer-Endgruppen exponentiell an, wobei am Ende eine, im Idealfall kugelförmige, Baumstruktur entsteht. Auf Grund ihres einheitlichen Aufbaus (im Idealfall enthalten alle Äste exakt dieselbe Anzahl von Monomereinheiten) sind Dendrimere im Wesentlichen monodispers, d. h. sie weisen in der Regel eine definierte Molmasse auf.

Molekular wie strukturell einheitliche hochverzweigte Polymere werden im Folgenden auch einheitlich als Dendrimere bezeichnet.

Unter hyperverzweigten Polymeren sollen im Rahmen dieser Erfindung hochverzweigte Polymere verstanden werden, die im Gegensatz zu den zuvor genannten Dendrimeren sowohl molekular wie auch strukturell uneinheitlich sind. Sie weisen Seitenketten und/oder Seitenäste unterschiedlicher Länge und Verzweigung sowie eine Molmassenverteilung (Polydispersität) auf.

Hochverzweigte Polymere lassen sich durch Ihren Verzweigungsgrad (Degree of Branching, DB) charakterisieren. Der Verzweigungsgrad DB ist dabei definiert als

$$DB (\%) = (T + Z) / (T + Z + L) \times 100,$$

mit

T mittlere Anzahl der terminal gebundenen Monomereinheiten,
Z mittlere Anzahl der Verzweigungen bildenden Monomerein heiten,
L mittlere Anzahl der linear gebundenen Monomereinheiten.

Hochverzweigte Polymere im Rahmen dieser Erfindung weisen einen Verzweigungsgrad DB von 10 bis 100 %, bevorzugt 10 bis 90 % und insbesondere bevorzugt 10 bis 80 % auf.

Dendrimere weisen im Allgemeinen einen Verzweigungsgrad DB von wenigstens 99 %, insbesondere 99,9 bis 100 % auf.

Hyperverzweigte Polymere weisen einen Verzweigungsgrad DB von 10 bis 95 %, bevorzugt 25 bis 90 % und insbesondere bevorzugt 30 bis 80 % auf.

Im Rahmen des erfindungsgemäßen Verfahrens zur Herstellung einer wässrigen Dispersion von Polymerisatteilchen können prinzipiell sowohl die strukturell und molekular einheitlichen Dendrimere wie auch die molekular und strukturell uneinheitlichen hyperverzweigten Polymere eingesetzt werden.

Hyperverzweigte Polymere sind in der Regel einfacher und somit wirtschaftlicher herstellbar als Dendrimere. So wird z. B. die Herstellung der monodispersen Dendrimere dadurch verkompliziert, dass bei jedem Verknüpfungsschritt Schutzgruppen eingeführt und wieder entfernt werden müssen, Im Gegensatz dazu kann die Synthese hyperverzweigter Polymere in vielen Fällen in einer Eintopfreaktion erfolgen. Verschiedene synthetische Ansätze zur Herstellung hyperverzweigter Polymere sind beispielsweise beschrieben in C. Gao, D. Yan, Prog. Polym. Sci. 29 (2004), Seiten 183 bis 275.

Erfindungsgemäß geeignete hochverzweigte Polymere sind prinzipiell durch Polykondensation oder Polyaddition zugänglich. Unter Polykondensation wird dabei die wiederholte chemische Umsetzung von funktionellen Verbindungen mit geeigneten reaktiven Verbindungen unter Abspaltung von niedermolekularen Verbindungen, wie beispielsweise Wasser, Alkohol oder HCl, verstanden. Unter Polyaddition wird dabei die wiederholte chemische Umsetzung von funktionellen Verbindungen mit geeigneten reaktiven Verbindungen ohne Abspaltung von niedermolekularen Verbindungen verstanden.

Erfindungsgemäß geeignet sind hochverzweigte Polymere, die durch Polyaddition oder Polykondensation entstandene Gruppen aufweisen, die vorzugsweise ausgewählt sind unter Ethergruppen, Estergruppen, Carbonatgruppen, Aminogruppen, Amidgruppen, Urethangruppen und Harnstoffgruppen.

Erfindungsgemäß geeignet sind hochverzweigte Polymere, die des weiteren funktionelle Gruppen aufweisen, die vorzugsweise gewählt sind aus Hydroxylgruppen, sowie aus Carbonsäuregruppen, Sulfonsäuregruppen oder Phosphonsäuregruppen.

Insbesondere können als hochverzweigte Polymere Polycarbonate, Polyester, Polyether, Polyurethane, Polyharnstoffe, Polyamide, sowie deren Mischformen, wie beispielsweise Poly(harnstoffurethane), Poly(etheramine), Poly (esteramine), Poly(ether-amide), Poly(esteramide), Poly(amidoamine), Poly(estercarbonate), Poly(ethercarbonate), Poly(etherester), Poly(etherestercarbonate) etc., eingesetzt werden.

Die Herstellung hochverzweigter Polymerer wird insbesondere in den folgenden Dokumenten beschrieben:

- WO-A 2005/026234 (hochverzweigte und speziell hyperverzweigte Polycarbonate),
- WO-A 01/46296, DE-A 10163163, DE-A 10219508 und DE-A 10240817 (hyperverzweigte Polyester),
- WO-A 09/101141, WO-A 03/062306, WO-A 00/56802, DE-A 10211664 und DE-A 19947631 (hyperverzweigte Polyether),
- WO-A 06/087227 [hyperverzweigte stickstoffatomhaltige Polymere, speziell Polyurethane, Polyharnstoffe, Polyamide, Poly(esteramide), Poly(esteramine)],
- WO-A 97/02304 und DE-A 19904444 [hyperverzweigte Polyurethane und hyperverzweigte Poly(harnstoffurethane),
- WO-A 03/066702, WO-A 05/044897 und WO-A 05/075541 (hyperverzweigte Polyharnstoffe),
- WO-A 05/007726 [hyperverzweigte aminogruppenhaltige Polymere, speziell Poly(esteramine)],
- WO-A 99/16810 und EP-A 1036106 [hyperverzweigte Poly(esteramide)],
- WO-A 06/018125 (hyperverzweigte Polyamide) und
- WO-A 06/089940 [hyperverzweigte Poly(estercarbonate)].

Erfindungsgemäß werden hochverzweigte Polymere eingesetzt, welche ≥ 0,3 mmol, vorteilhaft ≥ 0,5 und ≤ 20 mmol und bevorzugt ≥ 0,5 und ≤ 15 mmol an Säuregruppen pro Gramm hochverzweigtem Polymer aufweisen. Im Rahmen der vorliegenden Erfindung werden unter Säuregruppen alle diejenigen funktionellen Gruppen verstanden,

welche bei 20 °C in entionisiertem Wasser mit einem pH-Wert von ≥ 2 und ≤ 10 durch Abgabe von Protonen in ihre ionisierte Form übergehen können. Dabei sind die Säuregruppen vorteilhaft ausgewählt aus Carbonsäuregruppen (-$CO_2H$), Sulfonsäuregruppen (-$SO_3H$) und/oder Phosphonsäuregruppen (-$PO_3H_2$), wobei die Carbonsäuregruppen insbesondere bevorzugt sind. Selbstverständlich sollen erfindungsgemäß auch die Salze der vorgenannten Säuren, insbesondere deren Alkalimetall- und Ammoniumsalze umfasst sein.

Die Herstellung der säuregruppenhaltigen hochverzweigten Polymeren ist dem Fachmann geläufig.

So können die carbonsäuregruppenhaltigen hochverzweigten Polymeren beispielsweise durch Umsetzung von solchen hochverzweigten Polymeren, die Hydroxyl- und/oder primäre und sekundäre Aminogruppen enthalten mit Carbonsäurechloriden oder cyclischen Carbonsäureanhydriden erhalten werden, wie beispielsweise in WO 2006/089940 am Beispiel von hochverzweigten Polycarbonaten offenbart. Dabei kann der Gehalt an Carbonsäuregruppen in mg KOH pro Gramm hochverzweigtem Polymer durch Bestimmung der Säurezahl nach DIN 53402 analytisch bestimmt werden und entsprechend in mmol Carbonsäuregruppen pro Gramm Polymer umgerechnet werden.

Sulfonsäuregruppenhaltige hochverzweigte Polymere können beispielsweise durch Umsetzung von mindestens trifunktionellen Alkoholen mit mindestens difunktionellen Isocyanaten zu einem hochverzweigten Polyurethan und nachfolgende Umsetzung der im Polyurethan verbliebenen Isocyanatgruppen mit Natrium 2-Aminoethansulfonat erhalten werden. Die Synthese hyperverzweigter Polyurethane ist beispielsweise in WO 2004/101624 beschrieben. Abweichend zu dieser Schrift sind die im Rahmen dieser Erfindung bevorzugt eingesetzten mindestens trifunktionellen Alkohole Alkoxylate von Glycerin oder Trimethylolpropan, die mit 1 bis 20 molarem Überschuss an Ethy-lenoxid, Propylenoxid oder einem Gemisch beider umgesetzt wurden. Dabei kann der Gehalt an Sulfonsäuregruppen in mmol pro Gramm hochverzweigtem Polymer durch durch Bestimmung des Schwefelgehaltes des erfindungsgemäßen hyperverzweigten Polymeren mit Sulfonsäuregruppen über Elementaranalyse bestimmt werden.

Bevorzugt weisen die säuregruppenhaltigen hochverzweigten Polymeren neben den Säuregruppen noch Hydroxyl- und/oder Aminogruppen auf. Solche Gruppen sind beispielsweise im hochverzweigten Polymeren enthalten, wenn es sich bei dem hochverzweigten Polymeren um ein Polycarbonat, Polyester, Polyether, Polyurethan, Polyharnstoff, Polyamid, sowie um eine deren Mischformen, wie beispielsweise Poly(harnstoffurethane), Poly(etheramine), Poly (esteramine), Poly(etheramide), Poly(esteramide), Poly(amidoamine), Poly(estercarbonate), Poly(ethercarbonate), Poly (etherester), Poly(etherestercarbonate) handelt.

Ebenfalls vorteilhaft ist, wenn die säuregruppenhaltigen hochverzweigten Polymeren oder die hydroxyl- und/ oder aminogruppenaufweisenden säuregruppenhaltigen Polymeren zusätzlich noch ethylenisch ungesättigte Doppelbindungen enthalten. Solche Gruppen sind beispielsweise im hochverzweigten Polymeren enthalten, wenn das hochverzweigte Polymere ein Polyester ist, der durch Umsetzung von mindestens einem mindestens trifunktionellen Alkohol mit mindestens einer mindestens difunktionellen Carbonsäure erhalten wird, wobei mindestens 25 Gew.-% von mindestens difunktioneller Carbonsäure gewählt ist aus Maleinsäure, Fumarsäure, Itaconsäure oder deren Derivaten wie beispielsweise Anhydriden oder Mono- und Dialkylestem, und dieser Polyester während oder nach seiner Synthese durch Umsetzung mit Carbonsäurechloriden oder cyclischen Carbonsäureanhydriden mit zusätzlichen Carbonsäuregruppen versehen wird.

Weiterhin sind solche ethylenisch ungesättigten Gruppen beispielsweise in hyperverzweigten Polycarbonaten enthalten, die erhalten werden durch Umsetzung wenistens eines mindestens trifunktionellem Alkohol mit wenigstens einem organischen Carbonat, wobei während oder nach der Synthese mit solchen Verbindungen modifiziert werden kann, die ethylenisch ungesättigte Doppelbindungen sowie gegenüber Hydroxyl- und/oder Carbonatgruppen reaktive funktionelle Gruppen besitzen. Geeignete Verbindungen sind beispielsweise Isoprenol, Acrylsäure, Methacrylsäure, Maleinsäure, Fumarsäure, Itaconsäure oder deren Derivate wie beispielsweise Anhydride oder Mono- bzw. Dialkylester.

Die erfindungsgemäß einsetzbaren säuregruppenhaltigen hochverzweigten Polymeren. weisen in der Regel ein zahlenmittleres Molekulargewicht ≥ 700 und ≤ 100000 g/mol, vorteilhaft ≥ 1000 und ≤ 50000 g/mol auf. Die Bestimmung des zahlenmittleren Molekulargewichts ist dem Fachmann geläufig und erfolgt vorzugsweise durch Gelpermeationschromatographie, wobei Polymethylmethacrylat als Standard und Tetrahydrofuran oder Dimethylacetamid, je nachdem in welchem Lösungsmittel die Probe besser löslich ist, als Elutionsmittel verwendet wird. Die Methode ist im Analytiker Taschenbuch Bd. 4, Seiten 433 bis 442 , Berlin 1984 beschrieben.

Die erfindungsgemäß eingesetzte Menge an hochverzweigtem Polymeren beträgt ≥ 5 und ≤ 60 Gew.-%, bevorzugt ≥ 5 und ≤ 30 Gew.-% und insbesondere bevorzugt ≥ 5 und ≤ 25 Gew.-%, jeweils bezogen auf die Gesamtmonomerenmenge.

Erfindungswesentlich ist, dass im wässrigen Polymerisationsmedium zuerst lediglich

≥ 10 Gew.-% der Gesamtmenge des wenigstens einen hochverzweigten Polymeren und gegebenenfalls

≤ 50 Gew.-% der Gesamtmenge des wenigstens einen ethylenisch ungesättigten Monomeren M

vorgelegt und daran anschließend unter Polymerisationsbedingungen die gegebenenfalls verbliebene Restmenge des wenigstens einen hochverzweigten Polymeren zugegeben und die Gesamtmenge bzw. die gegebenenfalls verbliebene

Restmenge des wenigstens einen ethylenisch ungesättigten Monomeren M zugegeben und bis zu einem Monomerenumsatz ≥ 80 Gew.-% polymerisiert werden.

Erfindungsgemäß werden ≥ 10 Gew.-%, vorteilhaft ≥ 50 Gew.-%, bevorzugt ≥ 90 Gew.-% der Gesamtmenge des wenigstens einen hochverzweigten Polymeren im wässrigen Polymerisationsmedium vor Initiierung der Polymerisation vorgelegt. Mit besonderem Vorteil wird die Gesamtmenge des wenigstens einen hochverzweigten Polymeren im wässrigen Polymerisationsmedium vorgelegt. Die gegebenenfalls verbliebenen Restmengen des hochverzweigten Polymeren können dem wässrigen Polymerisationsmedium unter Polymerisationsbedingungen diskontinuierlich in einer oder mehreren Portionen oder kontinuierlich mit gleichbleibenden oder sich ändernden Mengenströmen zudosiert werden.

Erfindungswesentlich ist, dass ≤ 50 Gew.-% der Gesamtmonomerenmenge im wässrigen Polymerisationsmedium vorgelegt werden. Häufig werden ≤ 20 Gew.-% oder ≤ 10 Gew.-% im wässrigen Polymerisationsmedium vorgelegt. Es ist jedoch auch möglich im wässrigen Polymerisationsmedium kein Monomer M vorzulegen. Die Gesamtmenge bzw. die gegebenenfalls verbliebene Restemenge des Monomeren M kann dann dem wässrigen Polymerisationsmedium unter Polymerisationsbedingungen diskontinuierlich in einer oder mehreren Portionen oder kontinuierlich mit gleichbleibenden oder sich ändernden Mengenströmen zudosiert werden. Auch ist es möglich, dass sich die Zusammensetzung der Monomeren M während der Dosierung ändert (beispielsweise Stufen- bzw. Gradientenfahrweise).

Wird eine Teilmenge der Monomeren M vorgelegt, so erfolgt die Vorlage unter Bedingungen, welche nicht geeignet sind die Monomeren M zu polymerisieren. Beispielsweise wird kein Radkialinitiator vorgelegt oder wenn Radikalinitiator vorgelegt wird, dann unter Temperatur- und/oder Druckbedingungen, welche nicht geeignet ist den Zerfall des Radikalinitiators zu initiieren.

Mit besonderem Vorteil erfolgt die Zugabe der Monomeren M unter Polymerisationsbedingungen kontinuierlich mit gleichbleibenden Mengenströmen. Vorteilhaft werden die Monomeren M in Substanz zugegeben. Erfindungsgemäß vorteilhaft erfolgt die Zugabe der Monomeren M unter Polymerisationsbedingungen dergestalt, dass zu jedem Zeitpunkt der Zugabe ≥ 80 Gew.-%, vorteilhaft ≥ 90 Gew.-% der insgesamt bereits zugegebenen Monomeren M polymerisiert sind. Die entsprechenden Maßnahmen hierzu sind dem Fachmann geläufig (beispielsweise Verwendung eines Reaktionskalorimeters).

Im Rahmen der vorliegenden Erfindung werden unter Polymerisationsbedingungen generell diejenigen Temperaturen und Drücke verstanden, unter denen die radikalisch initiierte Polymerisationsreaktion mit ausreichender Polymerisationsgeschwindigkeit verläuft. Die Polymerisationsbedingungen sind insbesondere abhängig vom verwendeten Radikalinitiator. Vorteilhaft werden Art und Menge des Radikalinitiators, Polymerisationstemperatur und Polymerisationsdruck so gewählt, dass immer genügend Startradikale zur Verfügung stehen, um die Polymerisationsreaktion zu initiieren bzw. aufrechtzuerhalten. Insbesondere werden die Polymerisationstemperatur und der Polymerisationsdruck so gewählt, dass die Halbwertszeit des eingesetzten Radikalinitiators ≤ 3 Stunden, vorteilhaft ≤ 1 Stunde und insbesondere vorteilhaft ≤ 30 Minuten beträgt.

Als Reaktionstemperatur für das erfindungsgemäße Verfahren kommt der gesamte Bereich von 0 bis 170 °C in Betracht. Dabei werden in der Regel Temperaturen von 50 bis 120 °C, häufig 60 bis 110 °C und oft 70 bis 100 °C angewendet. Das erfindungsgemäße Verfahren kann bei einem Druck kleiner, gleich oder größer 1 atm [1,013 bar (absolut) Atmosphärendruck] durchgeführt werden, so dass die Polymerisationstemperatur 100 °C übersteigen und bis zu 170 °C betragen kann. Vorzugsweise werden leichtflüchtige Monomere, wie beispielsweise Ethylen, Butadien oder Vinylchlorid unter erhöhtem Druck polymerisiert. Dabei kann der Druck 1,2, 1,5, 2, 5, 10, 15 bar (absolut) oder noch höhere Werte einnehmen. Werden Polymerisationsreaktionen im Unterdruck durchgeführt, werden Drücke von 950 mbar, häufig von 900 mbar und oft 850 mbar (absolut) eingestellt. Vorteilhaft wird das erfindungsgemäße Verfahren bei 1 atm unter Sauerstoffausschluß, beispielsweise unter Inertgasatmosphäre, wie beispielsweise unter Stickstoff oder Argon durchgeführt.

Das wässrige Polymerisationsmedium kann gegebenenfalls zusätzlich noch geringe Mengen, in der Regel ≤ 10 Gew.-%, häufig ≤ 5 Gew.-% und oft ≤ 1 Gew.-% eines wasserlöslichen organischen Lösungsmittels mit einer Löslichkeit ≥ 200 g pro 1000 g entionisiertem Wasser bei 20 °C und 1 atm (absolut), bezogen auf die Gesamtwassermenge der wässrigen Polymerisatdispersion enthalten. Beispielhaft seien aliphatische $C_1$- bis $C_5$-Alkohole, wie Methanol, Ethanol, n-Propanol, iso-Propanol, n-Butanol sowie dessen isomeren Verbindungen, n-Pentanol sowie dessen isomere Verbindungen etc., aliphatische C3- bis C4-Ketone, wie Aceton oder Ethylmethylketon sowie cyclische Ether, wie Tetrahydrofuran oder Dioxan genannt. Vorteilhaft wird erfindungsgemäß kein organisches Lösungsmittel eingesetzt.

Erfindungsgemäß vorteilhaft weist das wässrige Polymerisationsmedium einen pH-Wert im Bereich ≥ 2 und ≤ 10, bevorzugt ≥ 5 und ≤ 9 und insbesondere bevorzugt ≥ 7 und ≤ 8,5 auf. Die Einstellung des pH-Wertes ist dem Fachmann geläufig und erfolgt vorteilhaft mit anorganischen oder organischen Säuren, wie beispielsweise Salzsäure, Schwefelsäure oder Essigsäure, anorganischen Basen, wie Natriumhydroxid, Kaliumhydroxid oder Ammoniumhydroxid oder übliche Puffergemische. Gemessen wird der pH-Wert des wässrigen Polymeriationsmedium bei Raumtemperatur mittels eines geeichten handelsüblichen pH-Meters.

Mit besonderem Vorteil erfolgt das erfindungsgemäße Verfahren dergestalt, dass die Monomeren M unter

Polymerisationsbedingungen bis zu einem Umsatz von ≥ 80 Gew.-%, vorteilhaft ≥ 95 Gew.-% und insbesondere vorteilhaft ≥ 99 Gew.-% umgesetzt werden. Häufig ist es vorteilhaft, wenn die nach Abschluss der Polymerisation erhaltene wässrige Polymerisatdispersion einer Nachbehandlung zur Reduzierung des Restmonomerengehalts unterzogen wird. Dabei erfolgt die Nachbehandlung entweder chemisch, beispielsweise durch Vervollständigung der Polymerisationsreaktion durch Einsatz eines effektiveren Radikalinitiatorensystems (sogenannte Nachpolymerisation) und/oder physikalisch, beispielsweise durch Strippung der wässrigen Polymerisatdispersion mit Wasserdampf oder Inertgas. Entsprechende chemische und/oder physikalische Methoden sind dem Fachmann geläufig [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115]. Dabei bietet die Kombination aus chemischer und physikalischer Nachbehandlung den Vorteil, dass neben den nicht umgesetzten Monomeren M, auch noch andere störende leichtflüchtige organischen Bestandteile (die sogenannten VOCs [volatile organic compounds]) aus der wässrigen Polymerisatdispersion entfernt werden.

Die nach dem erfindungsgemäßen Verfahren erhältlichen Polymerisatteilchen weisen einen über quasielastische Lichtstreuung (ISO-Norm 13 321) ermittelten zahlenmittleren Teilchendurchmesser (cumulant z-average) > 0 und ≤ 100 nm auf. Vorteilhaft beträgt der zahlenmittlere Teilchendurchmesser ≥ 5 und ≤ 90 nm und insbesondere vorteilhaft ≥ 10 und ≤ 70 nm.

Die nach dem erfindungsgemäßen Verfahren zugänglichen wässrigen Polymerisatdispersionen weisen Polymerisatteilchen auf, die in der Regel eine enge Teilchengrößenverteilung aufweisen.

Unter enger Teilchengrößenverteilung soll im Rahmen dieser Schrift verstanden werden, wenn das Verhältnis der nach der Methode der Analytischen Ultrazentrifuge (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175) ermittelten gewichtsmittleren Teilchendurchmesser $D_w50$ und zahlenmittleren Teilchendurchmesser $D_N50$ [$D_w50/D_N50$] ≤ 2,0, bevorzugt ≤ 1,5 und insbesondere bevorzugt ≤ 1,2 oder ≤ 1,1 ist.

Die erfindungsgemäß erhaltenen wässrigen Polymerisatdispersionen weisen üblicherweise Feststoffgehalte von ≥ 5 und ≤ 70 Gew.-%, häufig ≥ 10 und ≤ 50 Gew.-% und oft ≥ 15 und ≤ 40 Gew.-%, jeweils bezogen auf die wässrige Polymerisatdispersion, auf.

Wesentlich ist, dass die erfindungsgemäße wässrige Polymerisatdispersion optional auch weitere, dem Fachmann geläufige Hilfsstoffe, wie beispielsweise sogenannte Verdicker, Entschäumer, Neutralisationsmittel, Puffersubstanzen und/oder Konservierungsmittel enthalten kann.

Die erfindungsgemäßen wässrigen Polymerisatdispersionen eignen sich vorteilhaft zur Herstellung von Klebstoffen, Dichtmassen, Kunststoffputzen, Papierstreichmassen, Faservliesen, Beschichtungsmitteln, Kosmetikformulierungen und Schaumstoffen sowie zur Modifizierung von mineralischen Bindemitteln und Kunststoffen.

Ferner sind aus den erfindungsgemäßen wässrigen Polymerisatdispersionen in einfacher Weise (beispielsweise Gefrier- oder Sprühtrocknung) die entsprechenden Polymerisatpulver zugänglich. Diese erfindungsgemäß zugänglichen Polymerisatpulver lassen sich ebenfalls zur Herstellung von Klebstoffen, Dichtmassen, Kunststoffputzen, Papierstreichmassen, Faservliesen, Beschichtungsmitteln, Kosmetikformulierungen und schaumstoffen sowie zur Modifizierung von mineralischen Bindemitteln und Kunststoffen einsetzen.

Die Erfindung soll anhand nachfolgender nicht einschränkender Beispiele erläutert werden.

Beispiele

Polyol 1: Polyetherol basierend auf Trimethylolpropan (TMP), das pro Mol statistisch mit 5,2 Mol Propylenoxid umgesetzt wurde.

Polyol 2: Polyetherol basierend auf Trimethylolpropan (TMP), das pro Mol statistisch mit 15,6 Mol Propylenoxid umgesetzt wurde.

DBTL ist die Abkürzung für den Katalysator Di-n-butylzinndilaurat

Die hochverzweigten Polymere wurden per Gelpermeationschromatographie mit einem Refraktometer als Detektor analysiert. Als mobile Phase wurde Tetrahydrofuran (THF) oder Dimethylacetamid (DMAc) verwendet, als Standard zur Bestimmung des Molekulargewichts wurde Polymethylmetacrylat (PMMA) eingesetzt. Die Bestimmung der OH-Zahl erfolgte nach DIN 53240, Teil 2. Die Bestimmung der Säurezahl erfolgte nach DIN 53402.

Die Bestimmung NCO-Gehaltes erfolgte DIN EN ISO 11909.

a) Herstellung der hochverzweigten Polymere

Beispiel 1: Hochverzweigtes Polymer 1 (HVP1)

In einem 4 l-Glaskolben, der mit Rührer, Innenthermometer und Rückflusskühler ausgestattet war, wurden bei Raumtemperatur 2150 g Polyol 1, 709 g Diethylcarbonat sowie 0,9 g festes Kaliumhydroxid vorgelegt. Die Reaktionsmischung wurde unter Rühren auf 140 °C erhitzt und so lange am Sieden gehalten, bis die Temperatur des Reaktionsgemisches durch die Siedekühlung des freiwerdenden Ethanols auf eine konstante Temperatur von ca. 110 °C gefallen war. Nun wurde der Rückflusskühler durch eine absteigenden Kühler mit Auffanggefäß ersetzt und das bei der Reaktion entstandene Destillat entfernt, wobei die Temperatur des Reaktionsgemisches bis auf 220 °C erhöht wurde. Das Destillat wurde in einem gekühlten Rundkolben gesammelt, ausgewogen und der Umsatz so gegenüber dem theoretisch möglichen Vollumsatz prozentual ermittelt. Nach Erreichen eines Umsatzes von 94% wurde die Reaktionsmischung auf Raumtemperatur abgekühlt und durch Zugabe von 85 gew.-%iger wässriger Phosphorsäure auf einen pH-Wert von 7 gebracht. Anschließend wurde die Reaktionsmischung wieder erhitzt und bei einer Temperatur von 200 °C für 4 Stunden trockener Stickstoff durchgeleitet, um noch vorhandene Restmengen an flüchtigen Bestandteilen zu entfernen. Danach wurde die Reaktion durch Abkühlen auf Raumtemperatur beendet. Das erfindungsgemäße Polymer 1 (Vorstufe) wurde als hellgelbes Öl erhalten.

Nachfolgend wurden 830 g der vorgenannten hochverzweigten Polymervorstufe bei Raumtemperatur mit 215 g Bernsteinsäureanhydrid versetzt, unter Rühren auf 100 °C erhitzt und für 5 Stunden bei dieser Temperatur gerührt. Daran anschließend wurde die Reaktion durch Abkühlen auf Raumtemperatur beendet. HVP 1 wurde als gelbes Öl erhalten (GPC (THF): Mn = 1540 g/mol, Mw = 15210 g/mol; OH-Zahl = 18 mg KOH pro Gramm HVP1; Säurezahl = 122 mg KOH pro Gramm HVP1)

Beispiel 2: Hochverzweigtes Polymer 2 (HVP2)

In einem 4 l-Glaskolben, der mit Rührer, Innenthermometer und Rückflusskühler ausgestattet war, wurden bei Raumtemperatur 435 g 2,4-Toluylendiisocyanat vorgelegt. Über einen Zeitraum von 50 Minuten wurden dann unter Rühren 1075 g Polyol 1 so zugegeben, dass die Innentemperatur im Reaktionskolben nicht über 40 °C stieg. Nach erfolgter Zugabe wurde die Reaktionsmischung für 0,5 Stunden bei 35 °C gerührt, bis ein NCO-Gehalt von 7,6 Gew.-% erreicht war. Daran anschließend wurden weitere 1175 g Polyol 1 zugegeben und die Reaktionsmischung für 16 Stunden bei Raumtemperatur gerührt, wobei der NCO-Gehalt auf 0 Gew.-% abfiel. Es wurden 2300 g hochverzweigtes Polymer 2 (Vorstufe) erhalten.

Nachfolgend wurden bei Raumtemperatur 1000 g der vorgenannten hochverzweigten Polymervorstufe mit 250 g Bernsteinsäureanhydrid versetzt, unter Rühren auf 110 °C erhitzt und 6 Stunden bei dieser Temperatur gerührt. Daran anschließend wurde die Reaktion durch Abkühlen auf Raumtemperatur beendet. HVP 2 wurde als gelbes Öl erhalten (GPC (THF): Mn = 1380 g/mol, Mw = 5330 g/mol; OH-Zahl = 74 mg KOH pro Gramm HVP2; Säurezahl = 115 mg KOH pro Gramm HVP2).

Beispiel 3: Hochverzweigtes Polymer 3 (HVP3)

In einem 5 l-Vierhalskolben, der mit Rührer, Innenthermometer und Rückflusskühler ausgestattet war, wurden bei Raumtemperatur 3010 g Polyol 1, 1034 g Diethylcarbonat sowie 0,9 g festes Kaliumhydroxid vorgelegt. Das Reaktionsgemisch wurde unter Rühren zum Sieden erhitzt und so lange am Sieden gehalten, bis die Siedetemperatur des Reaktionsgemisches durch die Siedekühlung des freiwerdenden Ethanols auf eine konstante Temperatur (ca. 126 °C) gefallen war. Daran anschließend wurde der Rückflusskühler durch einen absteigenden Kühler mit Auffanggefäß ersetzt und das enstandene Destillat entfernt wobei die Temperatur des Reaktionsgemisches bis auf 190°C erhöht wurde. Als kein weiteres Destillat mehr anfiel, wurde die Reaktionsmischung auf Raumtemperatur abgekühlt und durch Zugabe von 85 gew.-%iger wässriger Phosphorsäure auf einen pH-Wert von 7 gebracht. Anschließend wurden verbliebene flüchtige Bestandteile entfernt, indem die Reaktionsmischung unter Rühren erhitzt und evakuiert wurde und anschließend für 30 Minuten bei einer Temperatur von 140°C bei 100 mbar (absolut) gehalten wurde. Nachfolgend wurde der Ansatz auf Raumtemperatur abgekühlt. Polymer 3 (Vorstufe) wurde als hellgelbes Öl erhalten.

Nachfolgend wurden bei Raumtemperatur 700 g der vorgenannten hochverzweigten Polymervorstufe mit 142 g Bernsteinsäureanhydrid versetzt, auf 130 °C erhitzt und 2 Stunden bei dieser Temperatur gerührt. Danach wurde das Reaktionsgemisch auf 60 °C abgekühlt und das im Rückflusskühler sublimierte Bernsteinsäureanhydrid durch Herunterwaschen mit 5 ml Aceton wieder der Reaktionsmischung zugeführt. Unter Abdestillieren des Acetons wurde die Reaktionsmischung innerhalb 1 Stunde erneut auf 130 °C erhitzt und weitere 30 Minuten bei dieser Temperatur gerührt. Daran anschließend wurde die Reaktion durch Abkühlen auf Raumtemperatur beendet. HVP3 wurde als gelbes Öl erhalten (GPC (DMAc): Mn = 2200 g/mol, Mw = 21500 g/mol; OH-Zahl = 54 mg KOH pro Gramm HVP3; Säurezahl = 102 mg KOH pro Gramm HVP3).

Beispiel 4: Hochverzweigtes Polymer 4 (HVP 4)

In einem 4 l-Glaskolben, der mit Rührer, Innenthermometer und absteigendem Kühler mit Auffanggefäß ausgestattet war, wurden bei Raumtemperatur 2048 g Polyol 2, 174 g Maleinsäureanhydrid sowie 0,1 g DBTL vorgelegt. Das Reaktionsgemisch wurde unter Rühren auf 180 °C erhitzt und so lange bei dieser Temperatur gehalten, bis die Säurezahl des Reaktionsgemisches auf 43 mg KOH pro Gramm Polymer gefallen war. Dann wurde die Reaktion durch Abkühlen auf Raumtemperatur beendet. Nachfolgend wurde das Reaktionsgemisch bei Raumtemperatur mit 275 g Bernsteinsäureanhydrid versetzt, unter Rühren auf 130 °C erhitzt und 2 Stunden bei dieser Temperatur gerührt. Daran anschließend wurde die Reaktion durch Abkühlen auf Raumtemperatur beendet. HVP4 wurde als gelbes Öl erhalten (GPC (DMAc): Mn = 1700 g/mol, Mw = 3600 g/mol, OH-Zahl = 59 mg KOH pro Gramm HVP4; Säurezahl = 104 mg KOH pro Gramm HVP4).

Beispiel 5: Hochverzweigtes Polymer 5 (HVP5)

In einem 2 l-Vierhalskolben, der mit Rührer, Innenthermometer und Rückflusskühler ausgestattet war, wurden bei Raumtemperatur 200 g Hexamethylendiisocyanat vorgelegt. Über einen Zeitraum von 5 Minuten wurden dann unter Rühren 1236 g Polyol 2 versetzt mit 0,1 g Benzoylchlorid so zugegeben, dass die Innentemperatur im Reaktionskolben nicht über 40 °C stieg. Nach erfolgter Zugabe wurde die Reaktionsmischung für 2,5 Stunden bei 50 - 60 °C gerührt. Das erhaltene Reaktionsgemisch wies ein NCO-Gehalt von 4,7 Gew.-% auf. Daran anschließend wurde die Reaktionsmischung mit 0,2 g DBTL versetzt und so lange bei 60 °C weitergerührt bis ein NCO-Gehalt von 3,6 Gew.-% erreicht war. Daran anschließend wurde die Reaktion durch Zugabe von einer Lösung aus 160 g 2-Aminopropansulfonsäure und 51 g Natriumhydroxid in 1200 g entionisiertem Wasser gestoppt und auf Raumtemperatur abgekühlt. HVP5 wurde als farbloses, zähe Masse erhalten (GPC (DMAc): Mn = 2395 g/mol, Mw = 30900 g/mol).

b) Herstellung der wässrigen Polymerisatdispersionen

Beispiel 6:

In einem 2 l-Glaskolben, ausgerüstet mit einem Rührer und 4 Dosiereinrichtungen wurden bei Raumtemperatur und unter Stickstoffatmosphäre 642 g entionisiertes Wasser, 9,2 g einer 25 gew.-%igen wässrigen Ammoniumhydroxidlösung, und 30 g HVP1 vorgelegt. Die Mischung wurde für zwei Stunden bei Raumtemperatur gerührt und anschließend aufgeheizt. Bei Erreichen einer Temperatur von 95 °C wurden zeitgleich beginnend Zulauf 1 über einen Zeitraum von 2 Stunden und Zulauf 2 über einen Zeitraum von 3 Stunden mit gleichbleibenden Mengenströmen zudosiert. Anschließend ließ man das Polymerisationsgemisch noch 1,5 Stunden bei 90 °C nachpolymerisieren, bevor zeitgleich beginnend Zulauf 3 und Zulauf 4 über einen Zeitraum von 1 Stunde mit gleichbleibenden Mengeströmen zudosiert wurden. Nach erfolgter Zugabe wurde der Reaktorinhalt auf Raumtemperatur abgekühlt und über ein 100 µm-Sieb filtriert.

Zulauf 1:

| | |
|---|---|
| 107 g | Styrol |
| 1,2 g | Methacrylsäure |
| 12 g | 1,4-Divinylbenzol |

Zulauf 2:

| | |
|---|---|
| 109 | g entionisiertes Wasser |
| 1,2 g | Ammoniumpersulfat |

Zulauf 3:

| | |
|---|---|
| 48 | g entionisiertes Wasser |
| 2,4 g | tert-Butylhydroperoxid |

Zulauf 4:

| | |
|---|---|
| 48 | g entionisiertes Wasser |
| 0,24 g | Natriumbisulfit |
| 0,16 g | Aceton |

Die erhaltene wässrige Polymerisatdispersion wies einen Feststoffgehalt von 14,7 Gew.-% bezogen auf das Gesamtgewicht der wässrigen Dispersion auf. Die Glasübergangstemperatur der Polymerisatteilchen wurde zu 122 °C und der zahlenmittlere Teilchendurchmesser zu 27 nm bestimmt.

Die Feststoffgehalte wurden generell bestimmt, indem eine definierte Menge der wässrigen Polymerisatdispersion (ca. 0,8 g) mit Hilfe des Feuchtebestimmers HR73 der Firma Mettler Toledo bei einer Temperatur von 130 °C bis zur Gewichtskonstanz getrocknet wurden (ca. 2 Stunden). Es wurden jeweils zwei Messung durchgeführt. Der jeweils angegebene Wert stellt den Mittelwert dieser Messungen dar.

Die zahlenmittleren Teilchendurchmesser der Polymerisatteilchen wurden generell durch dynamische Lichtstreuung an einer 0,005 bis 0,01 gewichtsprozentigen wässrigen Polymerisatdispersion bei 23 °C mittels eines Autosizers IIC der Fa. Malvern Instruments, England, ermittelt. Angegeben wird der mittlere Durchmesser der Kumulantenauswertung (cumulant z average) der gemessenen Autokorrelationsfunktion (ISO-Norm 13321).

Die Glasübergangstemperatur wurde generell nach dem DSC-Verfahren mittels eines Differential Scanning Kalorimeters der Firma Mettler Toledo ermittelt (Differential Scanning Calorimetry, 20 K/min, midpoint-Messung, DIN 53 765).

Beispiel 7:

In einem 2 l-Glaskolben, ausgerüstet mit einem Rührer und 4 Dosiereinrichtungen wurden bei Raumtemperatur und unter Stickstoffatmosphäre 600 g entionisiertes Wasser, 11,5 g einer 25 gew.-%igen wässrigen Ammoniumhydroxidlösung, und 30 g HVP2 vorgelegt. Die Mischung wurde für zwei Stunden bei Raumtemperatur gerührt und anschließend aufgeheizt. Bei Erreichen einer Temperatur von 95 °C wurden zeitgleich beginnend Zulauf 1 über einen Zeitraum von 2 Stunden und Zulauf 2 über einen Zeitraum von 3 Stunden mit gleichbleibenden Mengenströmen zudosiert. Anschließend ließ man das Polymerisationsgemisch noch 1,5 Stunden bei 90 °C nachpolymerisieren. Danach kühlte dann das Polymerisationsgemisch auf Raumtemperatur ab und filtrierte es über ein 100 µm-Sieb.

Zulauf 1:

| | |
|---|---|
| 112 g | Styrol |
| 48 g | 1,4-Divinylbenzol |

Zulauf 2:

| | |
|---|---|
| 208 g | entionisiertes Wasser |
| 1,6 g | Ammoniumpersulfat |

Die erhaltene wässrige Polymerisatdispersion wies einen Feststoffgehalt von 19,6 Gew.-% bezogen auf das Gesamtgewicht der wässrigen Dispersion auf. Die Glasübergangstemperatur der Polymerisatteilchen wurde zu 185 °C und der zahlenmittlere Teilchendurchmesser zu 43 nm bestimmt.

Beispiel 8:

In einem 2 l-Glaskolben, ausgerüstet mit einem Rührer und 4 Dosiereinrichtungen wurden bei Raumtemperatur und unter Stickstoffatmosphäre 460 g entionisiertes Wasser, 0,5 g einer 25 gew.-%igen wässrigen Ammoniumhydroxidlösung, 3 g HVP3 und 10 g von Zulauf 1 vorgelegt. Die Mischung wurde für zwei Stunden bei Raumtemperatur gerührt und anschließend aufgeheizt. Bei Erreichen einer Temperatur von 95 °C wurden zeitgleich beginnend die Restmenge von Zulauf 1 und die Gesamtmenge von Zulauf 3 über einen Zeitraum von 2 Stunden und Zulauf 2 über einen Zeitraum

von 3 Stunden mit gleichbleibenden Mengenströmen zudosiert. Anschließend ließ man das Polymerisationsgemisch noch 1,5 Stunden bei 90 °C nachpolymerisieren. Danach kühlte dann das Polymerisationsgemisch auf Raumtemperatur ab und filtrierte es über ein 100 μm-Sieb.

Zulauf 1:

| | |
|---|---|
| 89 g | Styrol |
| 1,0 g | Methacrylsäure |
| 10 g | 1,4-Divinylbenzol |

Zulauf 2:

| | |
|---|---|
| 130 g | entionisiertes Wasser |
| 1,0 g | Ammoniumpersulfat |

Zulauf 3:

| | |
|---|---|
| 300 g | entionisiertes Wasser |
| 17 g | HVP3 |
| 4,6 g | 25 gew.-%ige wässrige Ammoniaklösung |

Die erhaltene wässrige Polymerisatdispersion wies einen Feststoffgehalt von 11,7 Gew.-% bezogen auf das Gesamtgewicht der wässrigen Dispersion auf. Die Glasübergangstemperatur der Polymerisatteilchen wurde zu 122 °C und der zahlenmittlere Teilchendurchmesser zu 51 nm bestimmt.

Beispiel 9:

In einem 2 l-Glaskolben, ausgerüstet mit einem Rührer und 4 Dosiereinrichtungen wurden bei Raumtemperatur und unter Stickstoffatmosphäre 288 g entionisiertes Wasser, 12,3 g einer 25 gew.-%igen wässrigen Ammoniumhydroxidlösung, und 80 g HVP4 vorgelegt. Die Mischung wurde für zwei Stunden bei Raumtemperatur gerührt und anschließend aufgeheizt. Bei Erreichen einer Temperatur von 95 °C wurden zeitgleich beginnend Zulauf 1 über einen Zeitraum von 3 Stunden und Zulauf 2 über einen Zeitraum von 3,5 Stunden mit gleichbleibenden Mengenströmen zudosiert. Anschließend ließ man das Polymerisationsgemisch noch 1,5 Stunden bei 90 °C nachpolymerisieren. Danach kühlte dann das Polymerisationsgemisch auf Raumtemperatur ab und filtrierte es über ein 100 μm-Sieb.

Zulauf 1:

| | |
|---|---|
| 320 g | Styrol |

Zulauf 2:

| | |
|---|---|
| 200 g | entionisiertes Wasser |
| 4,0 g | Ammoniumpersulfat |

Die erhaltene wässrige Polymerisatdispersion wies einen Feststoffgehalt von 44,3 Gew.-% bezogen auf das Gesamtgewicht der wässrigen Dispersion auf. Die Glasübergangstemperatur der Polymerisatteilchen wurde zu 105 °C und der zahlenmittlere Teilchendurchmesser zu 55 nm bestimmt.

Beispiel 10:

In einem 2 l-Glaskolben, ausgerüstet mit einem Rührer und 4 Dosiereinrichtungen wurden bei Raumtemperatur und unter Stickstoffatmosphäre 624 g entionisiertes Wasser, 12,3 g einer 25 gew.-%igen wässrigen Ammoniumhydroxidlösung, und 80 g HVP5 vorgelegt. Die Mischung wurde für zwei Stunden bei Raumtemperatur gerührt und anschließend aufgeheizt. Bei Erreichen einer Temperatur von 95 °C wurden zeitgleich beginnend Zulauf 1 über einen Zeitraum von 2 Stunden und Zulauf 2 über einen Zeitraum von 3 Stunden mit gleichbleibenden Mengenströmen zudosiert. Anschließend ließ man das Polymerisationsgemisch noch 1 Stunde bei 90 °C nachpolymerisieren. Danach kühlte dann das Polymerisationsgemisch auf Raumtemperatur ab und filtrierte es über ein 100 µm-Sieb.

Zulauf 1:

| | |
|---|---|
| 112 g | Methylmethacrylate |
| 48 g | n-Butylacrylat |

Zulauf 2:

| | |
|---|---|
| 96 g | entionisiertes Wasser |
| 1,6 g | Ammoniumpersulfat |

Die erhaltene wässrige Polymerisatdispersion wies einen Feststoffgehalt von 20,3 Gew.-% bezogen auf das Gesamtgewicht der wässrigen Dispersion auf. Die Glasübergangstemperatur der Polymerisatteilchen wurde zu 39,8 °C und der zahlenmittlere Teilchendurchmesser zu 47 nm bestimmt.

Beispiel 11 (Vergleich):

Die Herstellung des Vergleichsbeispiels 11 erfolgte mit 5 Gew.-% HVP bezogen auf die Gesamtmenge der Monomere. Von dieser HVP-Menge wurden 5% vorgelegt und 95% zudosiert.

In einem 2 l-Glaskolben, ausgerüstet mit einem Rührer und 4 Dosiereinrichtungen wurden bei Raumtemperatur und unter Stickstoffatmosphäre 550 g entionisiertes Wasser und 5 g von Zulauf 3 vorgelegt. Die Mischung wurde für zwei Stunden bei Raumtemperatur gerührt und anschließend aufgeheizt. Bei Erreichen einer Temperatur von 95 °C wurden zeitgleich beginnend Zulauf 1 und die Restmenge von Zulauf 3 über einen Zeitraum von 3 Stunden und Zulauf 2 über einen Zeitraum von 3,5 Stunden mit gleichbleibenden Mengenströmen zudosiert. Anschließend ließ man das Polymerisationsgemisch noch 1,5 Stunden bei 90 °C nachpolymerisieren. Danach kühlte dann das Polymerisationsgemisch auf Raumtemperatur ab und filtrierte es über ein 100 µm-Sieb.

Zulauf 1:

| | |
|---|---|
| 98 g | Styrol |
| 2,0 g | 1,4-Divinylbenzol |

Zulauf 2:

| | |
|---|---|
| 130 g | entionisiertes Wasser |
| 1,0 g | Ammoniumpersulfat |

Zulauf 3:

| | |
|---|---|
| 100 g | entionisiertes Wasser |
| 5 g | HVP3 |
| 1,2 g | 25 gew.-%ige wässrige Ammoniaklösung |

Die erhaltene wässrige Polymerisatdispersion wies einen Feststoffgehalt von 11,6 Gew.-% bezogen auf das Gesamtgewicht der wässrigen Dispersion auf. Die Glasübergangstemperatur der Polymerisatteilchen wurde zu 110 °C und der zahlenmittlere Teilchendurchmesser zu 117 nm bestimmt.

Beispiel 12 (Vergleich)

Die Herstellung des Vergleichsbeispiels 12 erfolgte mit 1 Gew.-% HVP bezogen auf die Gesamtmenge der Monomere. Die vollständige Menge des HVP wurde vorgelegt.

In einem 2 l-Glaskolben, ausgerüstet mit einem Rührer und 4 Dosiereinrichtungen wurden bei Raumtemperatur und unter Stickstoffatmosphäre 744 g entionisiertes Wasser, 0,2 g einer 25 gew.-%igen wässrigen Ammoniumhydroxidlösung, und 1,20 g HVP2 vorgelegt. Die Mischung wurde für zwei Stunden bei Raumtemperatur gerührt und anschließend aufgeheizt. Bei Erreichen einer Temperatur von 95 °C wurden zeitgleich beginnend Zulauf 1 über einen Zeitraum von 2 Stunden und Zulauf 2 über einen Zeitraum von 3 Stunden mit gleichbleibenden Mengenströmen zudosiert. Ca. 40 Minuten nach Beginn der Zuläufe 1 und 2 kam es zu starken Ausflockungen, so dass der Versuch abgebrochen werden musste.

Zulauf 1:

| | |
|---|---|
| 94,8 g | Styrol |
| 24 g | 1,4-Divinylbenzol |
| 1,2 g | Methacrylsäure |

Zulauf 2:

| | |
|---|---|
| 156 g | entionisiertes Wasser |
| 1,2 g | Ammoniumpersulfat |

## Patentansprüche

1. Verfahren zur Herstellung einer wässrigen Dispersion von Polymerisatteilchen mit einem zahlenmittleren Teilchendurchmesser ≤ 100 nm durch radikalisch initiierte Polymerisation wenigstens eines ethylenisch ungesättigten Monomeren M in Anwesenheit wenigstens eines Radikalinitiators und wenigstens eines hoch-verzweigten Polymeren in einem wässrigen Polymerisationsmedium, wobei zur Polymerisation s 1 Gew.-% wenigstens eines Dispergierhilfsmittels und ≥ 5 und ≤ 60 Gew.% des wenigstens einen hochverzweigten Polymeren, bezogen auf die Gesamtmenge des wenigstens einen ethylenisch ungesättigten Monomeren M (Gesamtmonomerenmenge), eingesetzt werden, wobei das wenigstens eine hochverzweigte Polymere durch einen hochverzweigteVerzweigungsgrad DB von 10 bis 100% charakterisiert ist und wobei das wenigstens eine hochverzweigte Polymere ≥ 0,3 mmol Säuregruppen pro Gramm hochverzweigtem Polymer aufweist, **dadurch gekennzeichnet, dass** im wässrigen Polymerisationsmedium zuerst lediglich

   ≥ 10 Gew.-% der Gesamtmenge des wenigstens einen hochverzweigten Polymeren und gegebenenfalls
   ≤ 50 Gew.-% der Gesamtmenge des wenigstens einen ethylenisch ungesättigten Monomeren M

   vorgelegt und daran anschließend unter Polymerisationsbedingungen die gegebenenfalls verbliebene Restmenge des wenigstens einen hochverzweigten Polymeren zugegeben und die Gesamtmenge bzw. die gegebenenfalls verbliebene Restmenge des wenigstens einen ethylenisch ungesättigten Monomeren M zugegeben und bis zu einem Monomerenumsatz ≥ 80 Gew.-% polymerisiert werden.

2. Verfahren nach Anspruch 1, **dadurch gekennzeichnet, dass** das wenigstens eine hochverzweigte Polymere ≥ 0,5 und ≤ 20 mmol Säuregruppen pro Gramm hochverzweigtem Polymeren aufweist.

3. Verfahren nach einem der Ansprüche 1 und 2, **dadurch gekennzeichnet, dass** die Säuregruppen des wenigstens einen hochverzweigten Polymeren ausgewählt sind aus Carbonsäuregruppen ($-CO_2H$), Sulfonsäuregruppen ($-SO_3H$) und/oder Phosphonsäuregruppen ($-PO_3H_2$).

4. Verfahren nach einem der Ansprüche 1 bis 3, **dadurch gekennzeichnet, dass** das wenigstens eine hochverzweigte Polymere ein dendritisches Polymer ist.

5. Verfahren nach einem der Ansprüche 1 bis 4, **dadurch gekennzeichnet, dass** das wenigstens eine hochverzweigte Polymere ein zahlenmittleres Molekulargewicht ≥ 700 und ≤ 50000 g/mol aufweist.

6. Verfahren nach einem der Ansprüche 1 bis 5, **dadurch gekennzeichnet, dass** die Gesamtmenge des wenigstens einen hochverzweigten Polymeren ≥ 5 und ≤ 30 Gew.-%, bezogen auf die Gesamtmonomerenmenge beträgt.

7. Verfahren nach einem der Ansprüche 1 bis 6, **dadurch gekennzeichnet, dass** die Gesamtmenge des wenigstens einen hochverzweigten Polymeren vorgelegt wird.

8. Verfahren nach einem der Ansprüche 1 bis 7, **dadurch gekennzeichnet, dass** die Gesamtmenge des wenigstens einen ethylenisch ungesättigten Monomeren M ≥ 0,01 und ≤ 60 Gew.-% wenigstens eines Monomeren M enthält, welches wenigstens zwei nicht konjugierte ethylenisch ungesättigte Doppelbindungen aufweist.

9. Verfahren nach einem der Ansprüche 1 bis 8, **dadurch gekennzeichnet, dass** das wenigstens eine ethylenisch ungesättigte Monomer M unter Polymerisationsbedingungen in Substanz zugegeben wird.

10. Verfahren nach einem der Ansprüche 1 bis 9, **dadurch gekennzeichnet, dass** das wässrige Polymerisationsmedium einen pH-Wert im Bereich ≥ 2 und ≤ 10 aufweist.

11. Wässrige Polymerisatdispersion erhältlich nach einem Verfahren gemäß einem der Ansprüche 1 bis 10.

12. Polymerisatpulver erhältlich durch Trocknung einer wässrigen Polymerisatdispersion gemäß Anspruch 11.

13. Verwendung einer wässrigen Polymerisatdispersion gemäß Anspruch 11 oder eines Polymerisatpulvers gemäß Anspruch 12 zur Herstellung von Klebstoffen, Dichtmassen, Kunststoffputzen, Papierstreichmassen, Faservliesen, Beschichtungsmitteln, Kosmetikformulierungen und Schaumstoffen sowie zur Modifizierung von mineralischen Bindemitteln und Kunststoffen.

## Claims

1. A process for preparing an aqueous dispersion of polymer particles having a number-average particle diameter ≤ 100 nm by free-radically initiated polymerization of at least one ethylenically unsaturated monomer M in the presence of at least one free-radical initiator and at least one highly branched polymer in an aqueous polymerization medium, the polymerization being carried out using ≤ 1% by weight of at least one dispersing assistant and ≥ 5% and ≤ 60% by weight of the at least one highly branched polymer, based on the total amount of the at least one ethylenically unsaturated monomer M (total monomer amount), the at least one highly branched polymer being **characterized by** a degree of branching DB of 10% to 100% and the at least one highly branched polymer containing ≥ 0.3 mmol of acid groups per gram of highly branched polymer, which process comprises introducing in the aqueous polymerization medium initially only

   ≥ 10% by weight of the total amount of the at least one highly branched polymer and optionally
   ≤ 50% by weight of the total amount of the at least one ethylenically unsaturated monomer M

   and subsequently, under polymerization conditions, adding any remainder of the at least one highly branched polymer, and adding the total amount or any remainder of the at least one ethylenically unsaturated monomer M, and carrying out polymerization to a monomer conversion ≥ 80% by weight.

2. The process according to claim 1, wherein the at least one highly branched polymer contains ≥ 0.5 and ≤ 20 mmol of acid groups per gram of highly branched polymer.

3. The process according to either of claims 1 and 2, wherein the acid groups of the at least one highly branched polymer are selected from carboxylic acid groups ($-CO_2H$), sulfonic acid groups ($-SO_3H$) and/or phosphonic acid groups ($-PO_3H_2$).

4. The process according to any of claims 1 to 3, wherein the at least one highly branched polymer is a dendritic polymer.

5. The process according to any of claims 1 to 4, wherein the at least one highly branched polymer has a number-average molecular weight ≥ 700 and ≤ 50 000 g/mol.

6. The process according to any of claims 1 to 5, wherein the total amount of the at least one highly branched polymer is ≥ 5% and ≤ 30% by weight, based on the total monomer amount.

7. The process according to any of claims 1 to 6, wherein the total amount of the at least one highly branched polymer is included in the initial charge.

8. The process according to any of claims 1 to 7, wherein the total amount of the at least one ethylenically unsaturated monomer M contains ≥ 0.01 % and ≤ 60% by weight of at least one monomer M which has at least two nonconjugated ethylenically unsaturated double bonds.

9. The process according to any of claims 1 to 8, wherein the at least one ethylenically unsaturated monomer M is added in bulk under polymerization conditions.

10. The process according to any of claims 1 to 9, wherein the aqueous polymerization medium has a pH in the range ≥ 2 and ≤ 10.

11. An aqueous polymer dispersion obtainable by a process according to any of claims 1 to 10.

12. A polymer powder obtainable by drying an aqueous polymer dispersion according to claim 11.

13. The use of an aqueous polymer dispersion according to claim 11 or of a polymer powder according to claim 12 for producing an adhesive, sealant, polymeric render, paper coating slip, fiber nonwoven, coating composition, cosmetics formulation or foam or for modifying a mineral binder or a plastic.

**Revendications**

1. Procédé de fabrication d'une dispersion aqueuse de particules polymères ayant un diamètre de particule moyen en nombre ≤ 100 nm par polymérisation initiée radicalairement d'au moins un monomère éthyléniquement insaturé M en présence d'au moins un initiateur radicalaire et d'au moins un polymère hautement ramifié dans un milieu de polymérisation aqueux, ≤ 1 % en poids d'au moins un adjuvant de dispersion et ≥ 5 et ≤ 60 % en poids du ou des polymères hautement ramifiés, par rapport à la quantité totale du ou des monomères éthyléniquement insaturés M (quantité totale de monomères), étant utilisés pour la polymérisation, le ou les polymères hautement ramifiés étant **caractérisés par** un degré de ramification DB de 10 à 100 % et le ou les polymères hautement ramifiés comprenant ≥ 0,3 mmol de groupes acides par gramme de polymère hautement ramifié, **caractérisé en ce que** seulement
≥ 10 % en poids de la quantité totale du ou des polymères hautement ramifiés et éventuellement
≤ 50 % en poids de la quantité totale du ou des monomères éthyléniquement insaturés M
sont tout d'abord chargés dans le milieu de polymérisation aqueux, puis, dans les conditions de polymérisation, la quantité résiduelle éventuellement restante du ou des polymères hautement ramifiés est ajoutée et la quantité totale ou la quantité résiduelle éventuellement restante du ou des monomères éthyléniquement insaturés M est ajoutée et le mélange est polymérisé jusqu'à une conversion des monomères ≥ 80 % en poids.

2. Procédé selon la revendication 1, **caractérisé en ce que** le ou les polymères hautement ramifiés comprennent ≥ 0,5 et ≤ 20 mmol de groupes acides par gramme de polymères hautement ramifiés.

3. Procédé selon l'une quelconque des revendications 1 et 2, **caractérisé en ce que** les groupes acides du ou des

polymères hautement ramifiés sont choisis parmi les groupes acide carboxylique ($-CO_2H$), les groupes acide sulfonique ($-SO_3H$) et/ou les groupes acide phosphonique ($-PO_3H_2$).

4. Procédé selon l'une quelconque des revendications 1 à 3, **caractérisé en ce que** le ou les polymères hautement ramifiés sont un polymère dendritique.

5. Procédé selon l'une quelconque des revendications 1 à 4, **caractérisé en ce que** le ou les polymères hautement ramifiés présentent un poids moléculaire moyen en nombre ≥ 700 et ≤ 50 000 g/mol.

6. Procédé selon l'une quelconque des revendications 1 à 5, **caractérisé en ce que** la quantité totale du ou des polymères hautement ramifiés est ≥ 5 et ≤ 30 % en poids, par rapport à la quantité totale des monomères.

7. Procédé selon l'une quelconque des revendications 1 à 6, **caractérisé en ce que** la quantité totale du ou des polymères hautement ramifiés est chargée initialement.

8. Procédé selon l'une quelconque des revendications 1 à 7, **caractérisé en ce que** la quantité totale du ou des monomères éthyléniquement insaturés M continent ≥ 0,01 et ≤ 60 % en poids d'au moins un monomère M, qui comprend au moins deux doubles liaisons éthyléniquement insaturées non conjuguées.

9. Procédé selon l'une quelconque des revendications 1 à 8, **caractérisé en ce que** le ou les monomères éthyléniquement insaturés M sont ajoutés en substance dans les conditions de polymérisation.

10. Procédé selon l'une quelconque des revendications 1 à 9, **caractérisé en ce que** le milieu de polymérisation aqueux présente une valeur de pH dans la plage allant de ≥ 2 à ≥ 10.

11. Dispersion aqueuse de polymère pouvant être obtenue par un procédé selon l'une quelconque des revendications 1 à 10.

12. Poudre polymère pouvant être obtenue par séchage d'une dispersion aqueuse de polymère selon la revendication 11.

13. Utilisation d'une dispersion aqueuse de polymère selon la revendication 11 ou d'une poudre polymère selon la revendication 12 pour la fabrication d'adhésifs, de matériaux d'étanchéité, d'enduits synthétiques, de matériaux de revêtement de papier, de non-tissés fibreux, d'agents de revêtement, de formulations cosmétiques et de mousses, ainsi que pour la modification de liants minéraux et de plastiques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2004072125 A
- US 7109247 B
- US 2007202071 A
- WO 2008071801 A
- US 4269749 A
- WO 2005026234 A
- WO 0146296 A
- DE 10163163 A
- DE 10219508 A
- DE 10240817 A
- WO 09101141 A
- WO 03062306 A
- WO 0056802 A
- DE 10211664 A
- DE 19947631 A
- WO 06087227 A
- WO 9702304 A
- DE 19904444 A
- WO 03066702 A
- WO 05044897 A
- WO 05075541 A
- WO 05007726 A
- WO 9916810 A
- EP 1036106 A
- WO 06018125 A
- WO 06089940 A
- WO 2006089940 A
- WO 2004101624 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A


### In der Beschreibung aufgeführte Nicht-Patentliteratur


- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989
- **HOUBEN-WEYL.** Methoden der organischen Chemie, Band XIV/1, Makromolekulare Stoffe. Georg-Thieme-Verlag, 1961, vol. XIV-1
- **HOUBEN-WEYL.** Methoden der organischen Chemie, Band XIV/1, Makromolekulare Stoffe. Georg-Thieme-Verlag, 1961, vol. XIV-1, 192-208
- **H. STACHE.** Tensid-Taschenbuch. Carl-Hanser-Verlag, 1981
- **MCCUTCHEON'S.** Emulsifiers & Detergents. MC Publishing Company, 1989
- **P.J. FLORY.** *J. Am. Chem. Soc.,* 1952, vol. 74, 2718-2723
- **H. FREY et al.** *Chem. Eur. J.,* 2000, vol. 6 (14), 2499-2506
- **C. GAO ; D. YAN.** *Prog. Polym. Sci.,* 2004, vol. 29, 183-275
- *Analytiker Taschenbuch,* 1984, vol. 4, 433-442
- **S.E. HARDING et al.** Analytical Ultracentrifugation in Biochemistry and Polymer Science. Royal Society of Chemistry, 1992
- **W. MÄCHTLE.** *Analysis of Polymer Dispersions with an Eight-Cell-AUC-Multiplexer: High Resolution Particle Size Distribution and Density Gradient Techniques,* 147-175